# EUROPEAN PATENT APPLICATION

(11) **EP 0 665 695 A2**
(43) Date of publication of application: **02.08.1995**
(21) Application number: 95300472.8
(22) Date of filing: 26.01.1995
(51) Int. Cl.: H04N 9/28

(54) **Digital convergence apparatus**

(30) Priority: 26.01.1994 JP 6895/94
(71) Applicant: KABUSHIKI KAISHA TOSHIBA, Kawasaki-shi, Kanagawa-ken 210 (JP)
(72) Inventor: Sakamoto, Tsutomu, c/o Int. Prop. Div., Tokyo (JP); Fujiwara, Masanori, c/o Int. Prop. Div., Tokyo (JP); Tsuzuki, Yoshiji, c/o Int. Prop. Div., Tokyo (JP); Mihara, Hisayuki, c/o Int. Prop. Div., Tokyo (JP)
(74) Representative: O'Connell, David Christopher

(57) **Abstract**

A digital convergence apparatus according to one aspect of the present invention includes a digital memory for storing convergence correction field pattern data of M x N points corresponding to respective adjusting points on a screen, an interpolator for preparing, by a low-pass filter characteristics, interpolation data intended to fill up the space between the adjacent adjusting points using the data on the adjusting points read out from the digital memory, and a converter for converting the digital data output from the interpolation means to analog data to provide a convergence coil with the analog data as convergence correction signals.

## Description

This invention generally relates to a digital convergence apparatus, and more particularly, to a digital convergence apparatus for color television receivers and RGB three-tube type projectors.

The ever-increasing demand for larger sizes of screen in these days has led to the development of large-sized color television receivers and three-tube type color projectors. In the three-tube type projectors. the video signals in red, green and blue are provided through the projection tubes, the images output from each projector are superimposed one on another to give colored images. The screens however suffer with some chromatic deviations due to the different angles of incidence of the beams emitted from respective projection tubes onto the screen. As means for overcoming this type of color deviation, the respective projection tubes are provided with coils to which correction signals are provided to induce a magnetic field to adjust the direction of deviation of the electron beams thereby compensating the color deviations on the screens.

Conventionally, signals in a wide variety of waveforms have been generated by an analog circuit from the signals of horizontal and vertical scanning periods. An ingenious combination of these signals has allowed generation of the correction signals required. The convergence apparatus using such an analog circuit does not always produce exactly the desired correction signals, whose adjustment is very intricate and time-consuming.

Digital convergence apparatus have been developed for improving this sort of annoyance. The digital convergence apparatus stores beforehand in the memory for one frame of picture the data intended to generate convergence correcting signals, reads out the data in synchronization with the scanning and converts the digital data into analog data to provide it as a correction current to the convergence correction coil. By contrast with the convergence apparatus using the analog circuit, the digital convergence apparatus makes it easy to obtain desired correction signals.

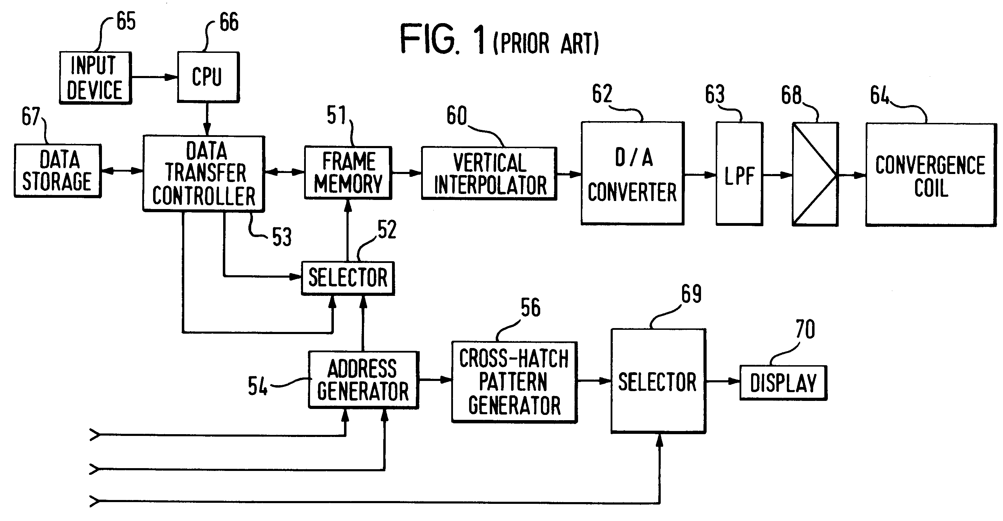

FIGURE 1 shows a conventional digital convergence apparatus.

Upon turning ON the power of a three-tube type projector, a control microprocessor (CPU) 66 comes into operation to activate a data transfer controller 53, which then reads out correction data of adjusting (or correction) points as stored in a data storage 67 to transfer it to a frame memory 51, when the data transfer controller 53 governs a selector 52 in such a way that a write address should be given to the frame memory 51. The write address is supplied from the data transfer controller 53.

According to the foregoing operation, first the correction data is stored in the frame memory 51. When this data transfer has completed, the data transfer controller 53 controls the selector 52 so that the selector 52 should select the readout address from read an address generator 54 to give it the frame memory 51. Through this process the correction data can be read out from the frame memory 51 in synchronization with the scanning of the projection tube. The data read out from the frame memory 51 is interpolated at a vertical interpolator 60, converted into analog signal at a digital-analog convertor 62, deprived of its higher harmonics at a low-pass filter (LPF) 63, and finally amplified by an amplifier 68 to be given to a convergence coil 64. The vertical interpolator 60 is a component that interpolates the correction data in order that correction data may be obtained by interpolation as far as the vertical direction is concerned since only the data of adjusting points, several both vertically and horizontally, can be stored to reduce the required memory size.

The read address generating portion 54 has been provided with a horizontal synchronization signal HD, a vertical sync signal VD and a system clock CLK. The read address can be had in synchronization with these signals.

In the following we will discuss the function and configuration of the convergence adjustment.

Under normal operational conditions video signals have been supplied to a display 70 through a selector 69. In the convergence adjust mode, however, the signal in a cross-hatch pattern generator 56 is supplied to the display 70 through the selector 69. User then can manipulate an input device 65 in watching the cross-hatch pattern to adjust a data storage 67.

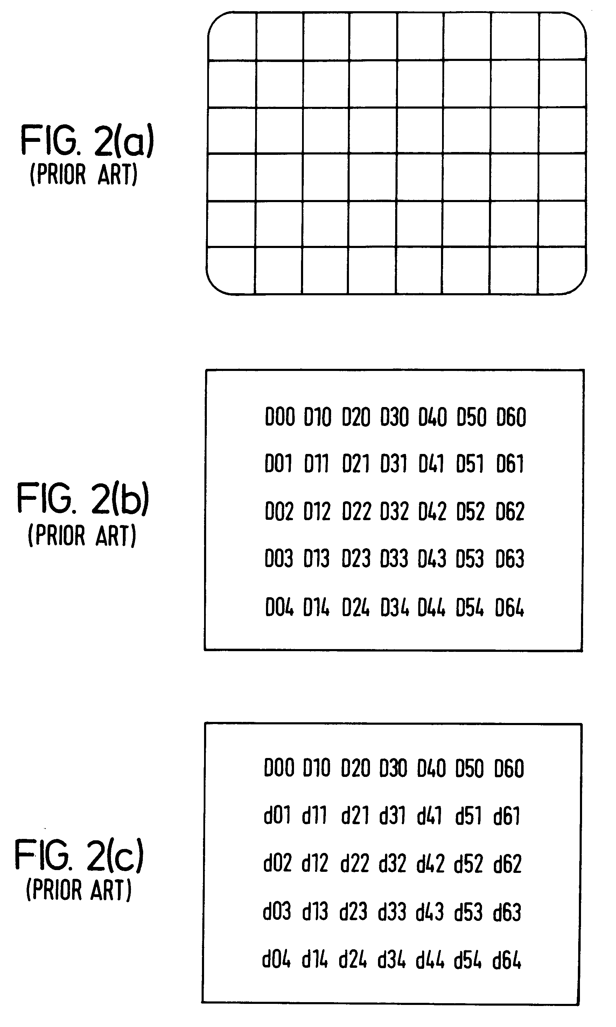

FIGURE 2(a) represents the signal coming from the cross-hatch pattern generator 56 as displayed on the display 70. At cross points of the cross-hatch pattern the input points of the data to be adjusted exist in coincidence with the data structure representing horizontal and vertical addresses in the frame memory 51. Here is shown, as an example, a case with seven horizontal points and five vertical points. The convergence data at respective points amount to thirty-five (D00, D10, D20, ... D64) as is illustrated in FIGURE 2(b). When the data is to be stored into the frame memory 51, it is stored as differential data between lines to decrease the memory capacity. As has been depicted in FIGURE 2(c), for instance, the differential data d01 and d02 are stored as the difference between D01 and D00, and the difference between D02 and D01, respectively.

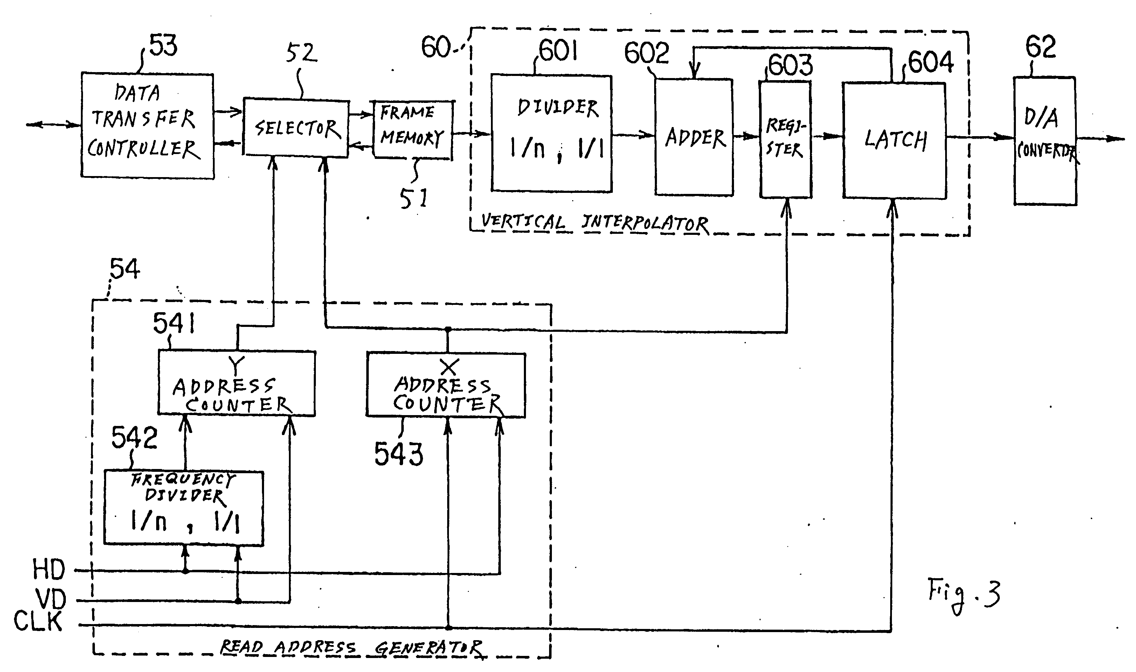

FIGURE 3 is a more detailed representation of the read address generator 54 and the vertical interpolator 60.

The read address generator 54 has a Y (vertical) address counter 541, a frequency divider 542. and an X (horizontal) address counter 543. The frequency divider 542, which is cleared by the vertical synchronization signal VD, divides the horizontal sync signal HD into 1/n (one n-th) and gives the Y address counter 541 the frequency division output. The Y address counter 541, which is reset by the vertical sync signal VD, generates Y address corresponding to the frame memory 51. The X (horizontal) address counter 543, which is reset by the horizontal sync signal HD, counts up the clock pulses CLK (n clock pulses CLK existing in one horizontal period) and generates X address corresponding to the frame memory 51.

The data output from the frame memory 51 is input into a divider 601 of the vertical interpolator 60, which divides the input data either into 1/n or 1/1. The divisor is same as the coefficient of the foregoing frequency divider 542. The output of the divider 601 is input into an adder 602, which adds up the result of the division and the output from a latch 604 described later, and supplies a register 603 with the result of this addition. The register 603 is a circuit for storing the data corresponding to one horizontal period, same pieces as the adjusting point data (m pieces) in horizontal direction of the frame memory 51 with all 0 (zero) input at the beginning of the vertical scanning period. Which data is to be processed among the m pieces of data depends on the address to be given by the X address counter 543.

The output data from the register 603 is input into the latch 604, which holds the data from the register 603 for one horizontal period giving sequentially the adder 602 and applies the output to the digital-analog converter 62.

In the following we will give a brief description of the operation.

In the upper portion of the display screen just after the vertical sync signal has been input, the Y address counter 541 indicates 0 (zero) and the data D00 in the frame memory 51 on 0-th line is read out. It has been so set that the coefficient of the divider 601 should be 1/1 if the 0-th line is read out. Into the adder 602 input as such will be the data D00 on the 0-th line of the frame memory 51. Since first 0 is input into the other input of the adder 602, the data D00 on the 0-th line of the frame memory 51 is held as such at the 0-th line of the register 603.

From then on, the data on the 0-th line of the frame memory 51 will be processed in synchronization with the clock CLK from left to right as 1st, 2nd, ... and m-th with m pieces of data being held at the register 603.

When the period shifts into the horizontal scanning, the output of the Y address counter 541 becomes 1, by which reading-out will be performed sequentially from the data d01 on the first line of the frame memory 51. This readout data is then divided into 1/n by the divider 601 and input into the adder 602 to be added to the data D00 of the corresponding horizontal period by one period in advance. In other words the result of the addition obtained is [D00 + (d01/n)], which is stored in the register 603. Also in the following horizontal period, data d01 is read out of the frame memory 51, which will then be divided into d01/n in the divider 601. As a result [D00 + 2/n x (d01)] will be obtained pursuant to the addition and stored into the register 603. Thus the correction data will increase by d01/n for each horizontal scanning with the calculation result being (D00 + d01) at the n-th scanning line. Since intrinsically (D00 + d01) is no other than the correction data D01, it comes out that the adjusting point data is reproduced.

In the foregoing description the explanation has been given taking an example of adjusting point data existing at the left-most position of the screen. The adjusting point data on other positions can be had similarly from the operations of data at the upper and lower regions. Such linear operational processing allows to obtain the convergence correction data for every scanning line. The interpolation value on the Y-th line from the D_{xy} point will be D_{xy} + (Y/n)d_{x(y+1)}.

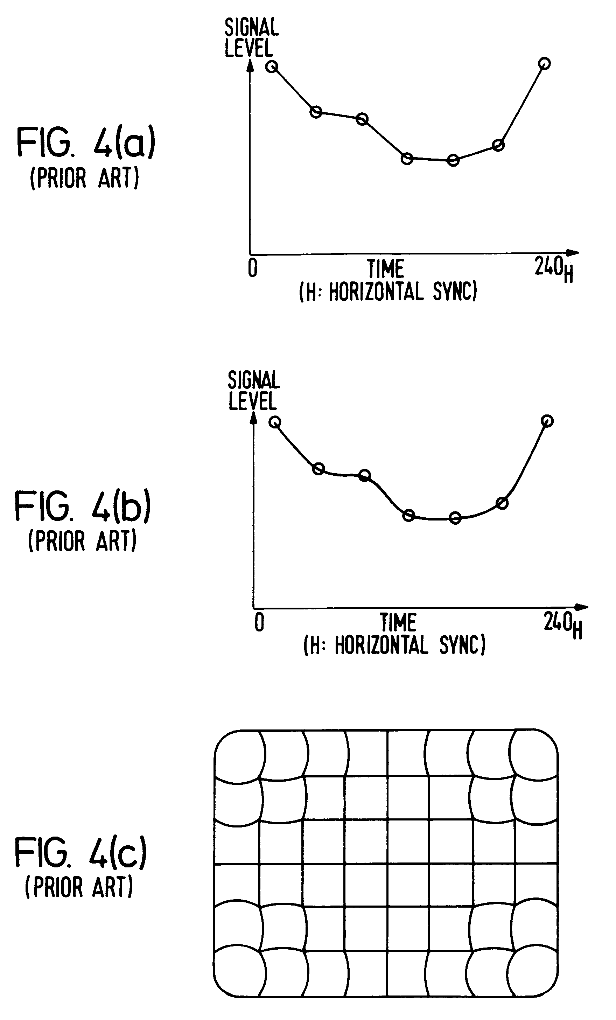

FIGURE 4(a) shows a variation of the convergence correction signal which is supplied to the convergence coil 64. The vertical axis represents the correction signal, while the horizontal axis represents the time-axis at the effective number of scanning lines, 0 to 240, for each field shown in full scale with one horizontal scanning period as a unit. The white circles corresponding to respective columns on the screen of the adjusting point data of the frame memory 51 represent, for instance, the adjusting point data D00, and D01 to D04 on the D00 to D04 columns. Between these white circles exist data obtained by the interpolation. As has been described earlier. two data at the upper and lower (left and right in the graph) points linked with a straight line can be had for one horizontal period. This arrangement enables to obtain the convergence correction data with fewer adjusting point data for all horizontal scanning periods.

However the conventional manner of the interpolation using the straight line, the space between the adjust (correction) points cannot correct completely the convergence distortion as shown in FIGURE 4(c), because television receivers such as projection type television receivers intrinsically suffer with large distortion featuring the polygonal lines with the adjusting points as vertices shown in FIGURE 4(a), there arises a large deviation from an ideal correction curve as shown in FIGURE 4(b). Since further a sharp change may cause a density of the scanning lines in any portion where the gradient of the correction data abruptly changes, a lateral bright zone will present in thicker scanning lines while a lateral dark zone will present in coarser scanning lines, these lateral bright and dark zones inevitably degrading the quality of displayed image.

It is, therefore, an object of the present invention to provide a digital convergence apparatus that makes, when the data between respective adjusting points is to be sought after by interpolation, the variation curve of the data be smoother, thereby rendering the convergence correction almost ideal.

In order to achieve the above object, a digital convergence apparatus according to one aspect of the present invention includes a digital memory for storing convergence correction field pattern data of M x N points corresponding to respective adjusting points on a screen, an interpolator for preparing, by a low-pass filter characteristics, interpolation data intended to fill up the space between the adjacent adjusting points using the data on the adjusting points read out from the digital memory, and a converter for converting the digital data output from the interpolation means to analog data to provide a convergence coil with the analog data as convergence correction signals.

The apparatus is able to make the convergence correction curve smoother in avoiding any bright and dark lines appearing due to the dispersion of thicker and thinner portions of scanning lines, thus enabling to have almost ideal correction characteristics.

Additional objects and advantages of the present invention will be apparent to persons skilled in the art from a study of the following description and the accompanying drawings, which are hereby incorporated in and constitute a part of this specification.

For a better understanding of the present invention and many of the attendant advantages thereof, reference will now be made by way of example to the accompanying drawings, wherein:
FIGURE 1 is a block diagram showing a conventional digital convergence apparatus;
FIGURE 2 is a diagram showing the principle of operation of the convergence correction;
FIGURE 3 is a block diagram showing detailed potions of apparatus of FIGURE 1;
FIGURE 4 is a drawing for explaining the operation of the conventional apparatus of FIGURE 3;
FIGURE 5 is a block diagram showing a first embodiment of the present invention;
FIGURE 6 is a drawing for illustrating an exemplary preparation of interpolation data and coefficients;
FIGURE 7 is a diagram for explaining the operation of the embodiment of FIGURE 5;
FIGURE 8 is a block diagram showing a second embodiment of the present invention; and
FIGURE 9 is a block diagram showing a third embodiment of the present invention.

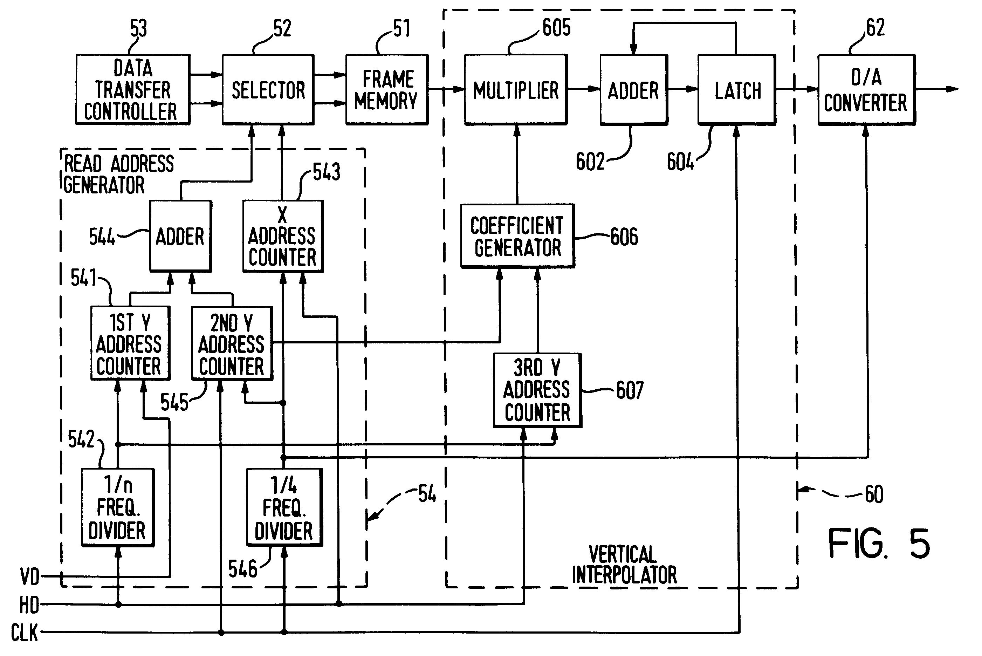

The present invention will be described in detail with reference to the FIGURES 5 through 9.

FIGURE 5 represents an embodiment of this invention. In this embodiment the general configuration is almost the same as the block diagrams of the conventional apparatus, as shown in FIGURES 1 and 3 . Accordingly like reference numerals will denote like parts in the FIGURES 1 and 3.

A data transfer controller 53 reads out correction data of adjusting (or correction) points as stored in a data storage (not shown) and transfers the correction data to a frame memory 51, when the data transfer controller 53 governs a selector 52 to give the frame memory 51 the write address. As the correction data has been stored into the frame memory 51, the data transfer controller 53 regulates the selector 52 in such a fashion that the selector 52 should select the read address from a read address generator 54 to give it to the frame memory 51. Thus from the frame memory 51 the correction data is read out in synchronization with the scanning of the projection tube. The data read out from the frame memory 51 will be interpolated at a vertical interpolator 60 and then converted into an analog signal by a digital/analog converter 62, deprived of its higher harmonic by a low-pass filter (not shown), amplified by an amplifier and finally given to a convergence coil.

The vertical interpolator 60 is a component where the correction data is interpolated. It is intended to generate the correction data by way of interpolation in the vertical direction since, for reducing a memory capacity, the data of only a few vertical and horizontal adjusting points has been stored in the frame memory 51.

Now the read address generator 54 and the vertical interpolator 60 will be described in more detail. The read address generator 54 is comprised of a first Y (vertical) address counter 541, a 1/n frequency divider 542, an X (horizontal) address counter 543, a second Y address counter 545, an adder 544 and finally a 1/4 frequency divider 546.

The 1/n frequency divider 542 divides the horizontal synchronization signal HD into 1/n (one-nth) and gives the frequency division output to the first Y address counter 541. The first Y address counter 541, which is reset by the vertical sync signal VD, counts up the frequency division output supplied from the 1/n frequency divider 542 and gives the output to the adder 544. The second Y address counter 545, which counts the clock pulses CLK (4xm pulses existing in every horizontal period), is cleared for every four clock pulses. That is, the crack pulses CLK are frequency-divided by the 1/4 frequency divider 546, where the division output will be supplied to the clear terminal of the second Y address counter 545. The output of the first and second Y address counters 541 and 545 are added together by the adder 544 to be used as the Y address for the frame memory 51.

The division output from the 1/4 frequency divider 546 is also applied into the X (horizontal) address counter 543. The X (horizontal) address counter 543, which is reset by the horizontal sync signal HD, generates the X address corresponding to the frame memory 51.

The selector 52 chooses, in a data read-out mode of the frame memory 51, both Y and X addresses from the read address generator 54 and gives them to the frame memory 51. The data read out from the frame memory 51 is input into a multiplier 605 of the vertical interpolator 60. In the multiplier 805 the input data is multiplied with the coefficient obtained from a coefficient generator 606. The coefficient from the coefficient generator 808 is read out by the address output from a third Y address counter 607. The third Y address counter 607, which is cleared by the frequency division output from the 1/n frequency divider 542, counts up the horizontal sync signal HD, and reads out its value as a readout address. From this it results that the output address of the third Y address counter 607 indicates at which line from the position of the adjusting point data it lies, because the timing at which the pulses can be obtained from the 1/n frequency divider 542 coincides with the position of the adjusting point data.

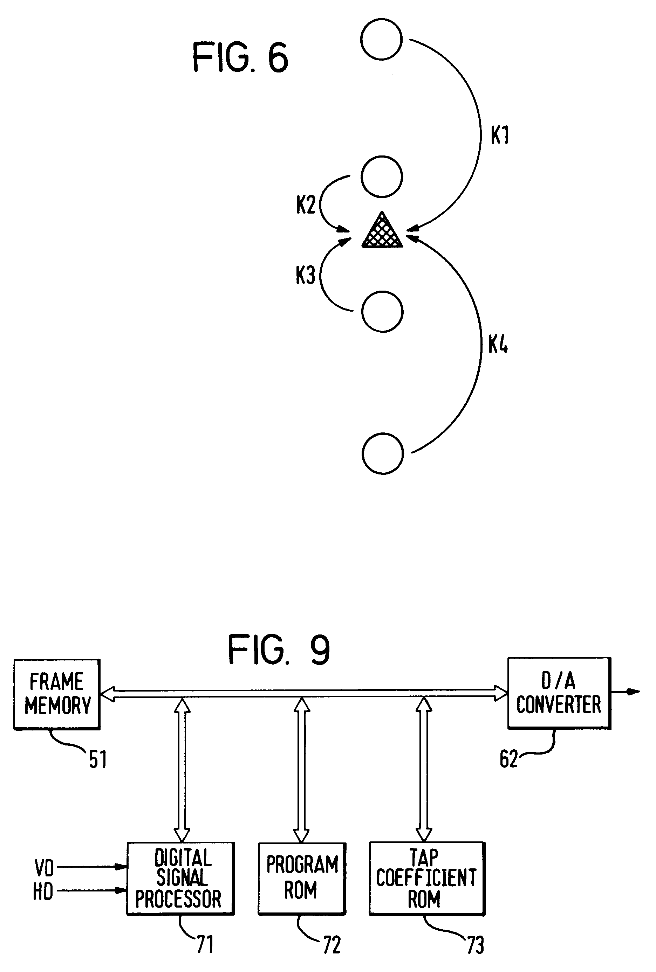

FIGURE 6 shows how to form the coefficients.

The respective coefficients, which are stored in the coefficient generator 606, have been calculated in response to the distance from the adjusting point data stored beforehand into the frame memory 51. The black triangle mark stands for the position of the scanning line to be calculated, while the white circles stand for the positions of the adjusting point data input beforehand into the frame memory 51. The distances of these white circles from the black triangle can be calculated as sums of the values from the second Y address counter 545 (0 to 4) which are input values and the values from the third Y address counter 807 (0 to n). Based on these distances. a set of tap coefficients calculated in advance using the theory of the FIR type filter and written into a ROM table are taken out of the coefficient generator 606. Also the read-out address has been prepared by combined use of the address from the second Y address counter 545 and that from the third Y address counter 607.

The output of the multiplier 605 is supplied to the adder 602, where the output of a latch 604 is added with the output from the multiplier 605. In the latch 604 the added output of the adder 602 is latched, so that the output of the latch 604 is fed back to the adder 602. and at the same time output to the digital-analog converter 82.

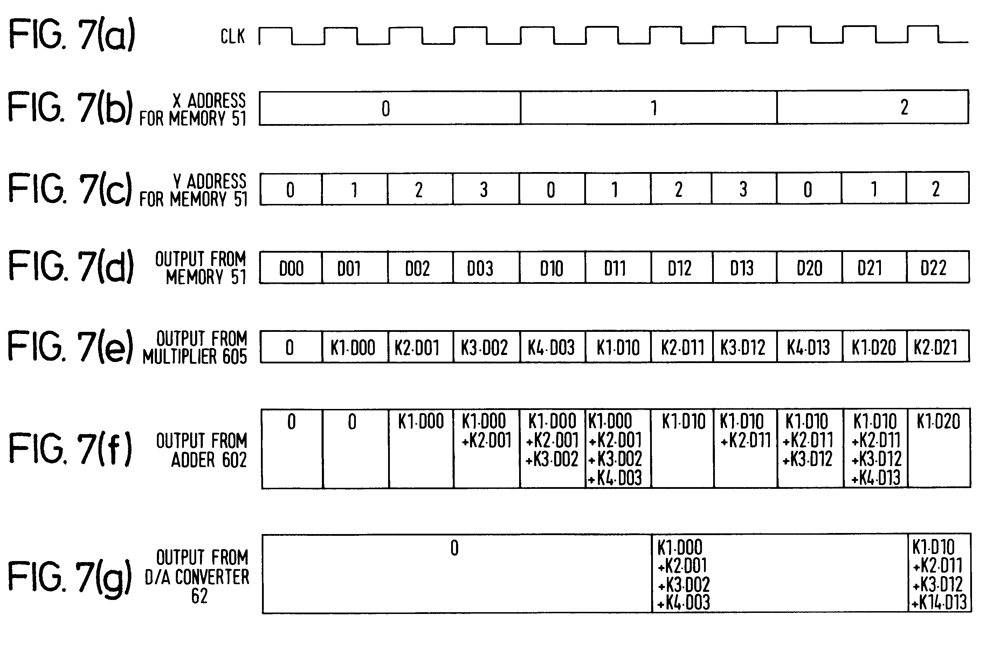

Referring now to FIGURES 7(a) to 7(g), the operation of the digital filter will be described in detail.

The lateral direction in FIGURES 7(a) to 7(g) present the time axis direction . FIGURE 7(a) represents the clock pulses CLK where there exist 4 x m pulses within one horizontal period. FIGURE 7(b) indicates the X address of the frame memory 51 where one address advances for every four basic clock pulses CLK. FIGURE 7(c) is the Y address of the frame memory 51, which increases one by one for every basic clock CLK. Though 0, 1, 2, 3, 0, ... are given for short in the figure. the same sequence will become 1, 2, 3, 4, 1, ... if the first Y address counter 541 counts up after the scanning of n horizontal lines, and the same change will apply to the followings, FIGURE 7(d) presents the output adjusting point data of the memory 51. FIGURE 7(e) presents the output result of the multiplier 605 where coefficients K1, K2, K3 and K4 have been induced from the coefficient generator 606 and then multiplied by the adjusting point data from the frame memory 51 into K1 x D00, K2 x D01, K3 x D02 and so forth.

FIGURE 7(f) indicates the output data of the adder 602 resulting from the addition of the data from the multiplier 605 and that from the latch 604. Since the latch 604 first holds 0 (zero), only K1 x D00 from the multiplier 605 is output and held in the latch 604 in the next stage. In the following clock cycle, K2 x D01 is output from the multiplier 605, to which K1 x D00 held in the latch 604 will be added to be held once again in the latch 604. Then K3 x D02 will be added and finally K4 x D03 will be added up also to be maintained in the latch 604.

FIGURE 7(g) represents the output data of the digital-analog converter 62 where, after 4 additions in the adder 602, the digital data of K1 x D00 + K2 x D01 + K3 x D02 + K4 x D03 will be converted into an analog value to be output thereafter. These operations are repeated, and after a further 4 clocks, output will be the data K1 x D10 + K2 x D11 + K3 x D12 + K4 x D13 corresponding to the right neighborhood in the screen. After the scanning of the n horizontal lines, the adjusting point data of the frame memory 51, which is the basis of the calculation will come lower by one line to become K1 x D01 + K2 x D02 + K3 x D03 + K4 x D04. Thus the interpolation will be repeated on the basis of the data of four upper and lower adjusting points to prepare the data between the adjusting points. Here the smoothness and continuity of the data variation as well as the shape of the curve depend largely on the low-pass filter characteristics to be defined by the tap coefficient of the digital filter. The data thus become smoother, as shown in FIGURE 4(b). Although it cannot cope with an abrupt change, because of the intrinsical nature of the low-pass filter, an ideal interpolation will be feasible if a suitable tap coefficients can be chosen because the convergence correction signal is intrinsically gentle with no high frequency component included.

In actual operation it is required to obtain the above-mentioned data between D00 and D01 and that above the D00 (vertical direction). In this case a conceivable method to be applied will be to proceed on the assumption that the data of two adjusting points the same in value with D00 does exist above D00 with the same intervals. In this case it is simply exerted by an ingenuity in counting up the second Y address counter 545 so that the count value should be 0, 0, 0, 1, ... when seeking for the data above D00 and that it should be 0, 0, 1, 2, ... when searching for the interval between D00 and D01.

An interpolator comprised of the read address generator 54 and the vertical interpolator 60 performs the operational processing presuming that the data whose value is the same as those of the data of adjusting points at the upper and lower regions in the digital memory 51 does exist continuously on the upper and lower regions beyond the respective end points.

Another interpolation manner will be to treat the adjusting points above D00 as extended with the same differences as those between D00 and D01. In this case the operational processing will be performed on the assumption that the data indicating the difference between the data of the adjusting points at the upper and lower regions in the digital memory 51 and that within these data do exist continuously on the upper and lower regions beyond the two ends respectively.

Four points of the input data for the digital filter have been used in the above illustrative embodiment, but three or more points of the input data can be used. Furthermore an applicable embodiment may include plural combinations of the tap coefficients of the digital filter. More concretely a plurality of data ROMs within the coefficient generator 606 so that the characteristics may be easily changed over to have any optimal interpolation characteristic, for instance, when the frame amplitude alters on a wide or normal screen due to the deflection system or when the number of the scanning lines and/or the density of the scanning lines are changed between receptions of the NTSC system and the HDTV system. In other words, the coefficient generator can be provided with plural sorts of coefficient tables in such a manner that the coefficient tables are selectably used. Further it is also possible to provide a coefficient table with coefficients rewritable from the exterior.

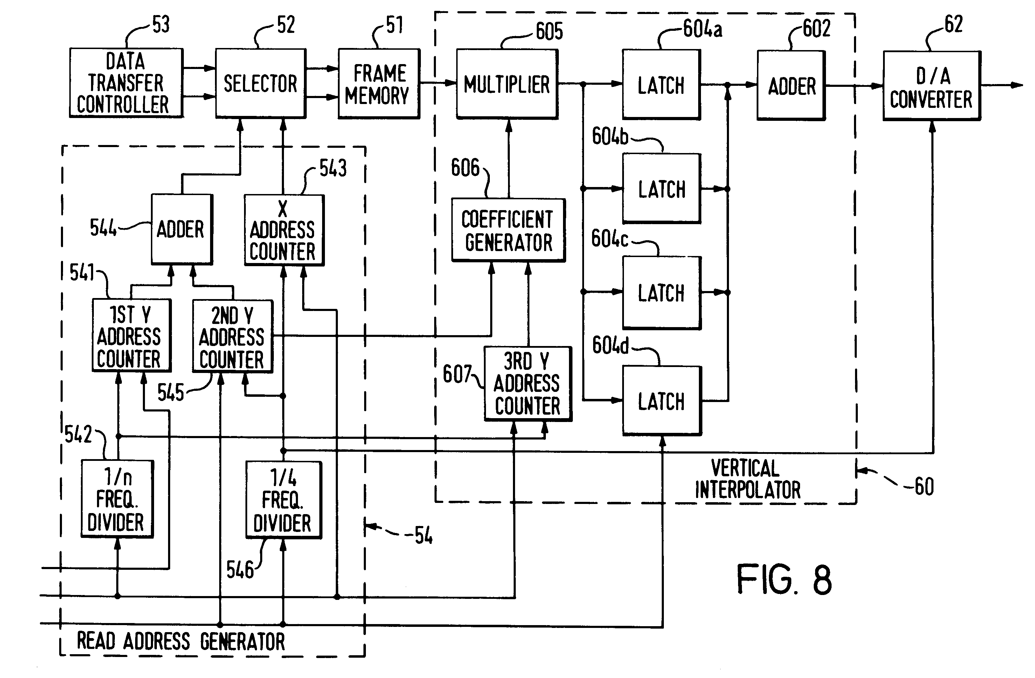

FIGURE 8 is a block diagram showing another embodiment of the present invention. Like reference letters or numerals are used for elements or portions like those in the first embodiment as shown in FIGURE 5. In this second embodiment a vertical interpolator 60 differs from the vertical interpolator 60 in the first embodiment of FIGURE 5 . That is, as shown in FIGURE 5, outputs of an multiplier 605 are sequentially latched one after another in latches 604a, 604b, ... 604d, and then summed in an adder 602 for resulting an output data when a set of the multiplication results have all been latched in the latches 604a, 604b, ... 604d. Thus the vertical interpolator 60 of the second embodiment can also perform a sort of low-pass filtering operation for obtaining the convergence correction data with smooth curves.

FIGURE 9 represents still another embodiment of the present invention. In this embodiment convergence correction data with a variety of values can be obtained when preparing the convergence correction data, using data from a digital signal processor 71, a program ROM 72 and a tap coefficient ROM 73. Further in this embodiment data obtained using a software routine can be output through a conversion into an analog signal by a digital-analog converter 62.

As has been thus far discussed this invention makes it possible to have the interpolation data between plural adjusting point data with a smooth characteristic curve thus rendering the convergence correction nearly ideal.

As described above, the present invention can provide an extremely preferable digital convergence apparatus.

While there have been illustrated and described what are at present considered to be preferred embodiments of the present invention, it will be understood by those skilled in the art that various changes and modifications may be made, and equivalents may be substituted for elements thereof without departing from the true scope of the present invention. In addition, many modifications may be made to adapt a particular situation or material to the teaching of the present invention without departing from the central scope thereof. Therefor, it is intended that the present invention not be limited to the particular embodiment disclosed as the best mode contemplated for carrying out the present invention, but that the present invention includes all embodiments falling within the scope of the appended claims.

The foregoing description and the drawings are regarded by the applicant as including a variety of individually inventive concepts, some of which may lie partially or wholly outside the scope of some or all of the following claims. The fact that the applicant has chosen at the time of filing of the present application to restrict the claimed scope of protection in accordance with the following claims is not to be taken as a disclaimer or alternative inventive concepts that are included in the contents of the application and could be defined by claims differing in scope from the following claims, which different claims may be adopted subsequently during prosecution, for example, for the purposes of a divisional application.

## Claims

1. A digital convergence apparatus, comprising:
a digital memory for storing convergence correction field pattern data of M x N points corresponding to respective adjusting points on a screen;
interpolation means for preparing, by a low-pass filter characteristics, interpolation data intended to fill up the space between the adjacent adjusting points using the data on the adjusting points read out from the digital memory; and
means for converting the digital data output from the interpolation means to analog data to provide a convergence coil with the analog data as convergence correction signals.

2. A digital convergence apparatus as claimed in claim 1, the interpolation means includes a digital low-pass filter which prepares the interpolation data using at least three data as of the data on the plural adjusting points in the vertical direction of the screen.

3. A digital convergence apparatus as claimed in claim 1, the interpolation means includes an FIR type digital low-pass filter which prepares the interpolation data using at least four data as of the data on the plural adjusting points in the vertical direction of the screen as the data on the plural adjusting points.

4. A digital convergence apparatus as claimed in claim 1, the interpolation means includes:
means for generating coefficients using, as addresses, current position of scanning lines and such information indicating the timing at which the data is to be processed between the vertical scanning lines;
means for multiplying the coefficients obtained from the coefficient generating means with the data of adjusting points read out from the digital memory; and
means for summing up plural multiplication results obtained from the multiplying means with each other so as to yield an operational output.

5. A digital convergence apparatus as claimed in claim 1, the interpolation means processes operations assuming that the data values are same as those of the adjusting point data at both the upper and lower ends of a field pattern stored in the digital memory to exist continuously also on the upper and lower regions outside the field pattern.

6. A digital convergence apparatus as claimed in claim 1, the interpolation means processes the operation assuming that the data indicating the difference between the adjusting point data at the upper and lower regions of a field pattern in the digital memory and the data inside the field pattern continuously extend also over the upper and lower regions outside the field pattern.

7. A digital convergence apparatus as claimed in claim 3, the coefficient generating means contains plural sorts of coefficient tables which can be selectively used.

8. A digital convergence apparatus as claimed in claim 3, the coefficient generating means contains a coefficient table with coefficients rewritable from the exterior.

9. A digital convergence apparatus as claimed in claim 3, the interpolation means includes a signal processing microprocessor storing wherein a program having FIR type digital filter operational algorithm and a memory having coefficient tables for FIR type digital filter.
